(19) Europäisches Patentamt
European Patent Office
Office européen des brevets

(11) **EP 4 773 013 A1**

(12) **EUROPEAN PATENT APPLICATION**
published in accordance with Art. 153(4) EPC

(43) Date of publication:
**08.07.2026 Bulletin 2026/28**

(21) Application number: **24859761.9**

(22) Date of filing: **27.08.2024**

(51) International Patent Classification (IPC):
***G06F 12/02*** (2006.01)

(52) Cooperative Patent Classification (CPC):
**G06F 12/02**

(86) International application number:
**PCT/JP2024/030468**

(87) International publication number:
**WO 2025/047729 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 US 202363535921 P**

(71) Applicant: **Nuvoton Technology Corporation
Japan
Nagaokakyo City, Kyoto 617-8520 (JP)**

(72) Inventors:
• **FUKUDA, Shohei
Nagaokakyo City, Kyoto 617-8520 (JP)**
• **KUBO, Kazuyuki
Nagaokakyo City, Kyoto 617-8520 (JP)**
• **KATAYAMA, Hajime
Nagaokakyo City, Kyoto 617-8520 (JP)**

(74) Representative: **Appelt, Christian W.
Boehmert & Boehmert
Anwaltspartnerschaft mbB
Pettenkoferstrasse 22
80336 München (DE)**

(54) **MEMORY SYSTEM, MEMORY CONTROLLER, EXTERNAL MEMORY, MEMORY CONTROL METHOD, AND OPERATION METHOD**

(57) A memory system (100a) includes a memory controller (130) and an external memory (140) connected to the memory controller (130). The memory controller (130) transmits, to the external memory (140): a read command or a write command; a data size; an address interval that is an interval between addresses of units of contiguous data of the data size; and a start address. The external memory (140) reads or writes data based on the data size, the address interval, and the start address so as to perform access in accordance with the read command or the write command.

FIG. 4

**Description**

[Technical Field]

The present disclosure relates to a memory system, a memory controller, an external memory, a memory control method, and an operation method.

[Background Art]

In recent years, memory systems capable of improving access performance have been studied (for example, see Patent Literature (PTL) 1).

[Citation List]

[Patent Literature]

[PTL 1] Japanese Unexamined Patent Application Publication No. 2024-103198

[Summary of Invention]

[Technical Problem]

In memory, data at non-contiguous addresses may be accessed. In such cases, it is desirable to inhibit deterioration of access efficiency.

In view of this, the present disclosure provides a memory system, a memory controller, external memory, a memory control method, and an operation method that can inhibit deterioration of access efficiency when accessing data at non-contiguous addresses.

[Solution to Problem]

A memory system according to one aspect of the present disclosure includes: a memory controller; and external memory connected to the memory controller. The memory controller is configured to transmit, to the external memory: a read command or a write command; a data size; an address interval that is an interval between addresses of units of contiguous data of the data size; and a start address. The external memory is configured to read or write data based on the data size, the address interval, and the start address to perform access in accordance with the read command or the write command.

A memory controller according to one aspect of the present disclosure is the memory controller included in the memory system described above.

An external memory according to one aspect of the present disclosure is the external memory included in the memory system described above.

A memory control method according to one aspect of the present disclosure is a memory control method executed by the memory controller in the memory system described above, and includes: transmitting, to the external memory: the read command or the write command; the data size; the address interval that is an interval between addresses of units of contiguous data of the data size; and the start address.

An operation method according to one aspect of the present disclosure is an operation method executed by the external memory in the memory system described above, and includes: obtaining, from the memory controller: the read command or the write command; the data size; the address interval that is an interval between addresses of units of contiguous data of the data size; and the start address; and reading or writing data based on the data size, the address interval, and the start address to perform access in accordance with the read command or the write command.

[Advantageous Effects of Invention]

According to one aspect of the present disclosure, a memory system and the like that can inhibit deterioration of access efficiency when accessing data at non-contiguous addresses can be realized.

[Brief Description of Drawings]

[FIG. 1]

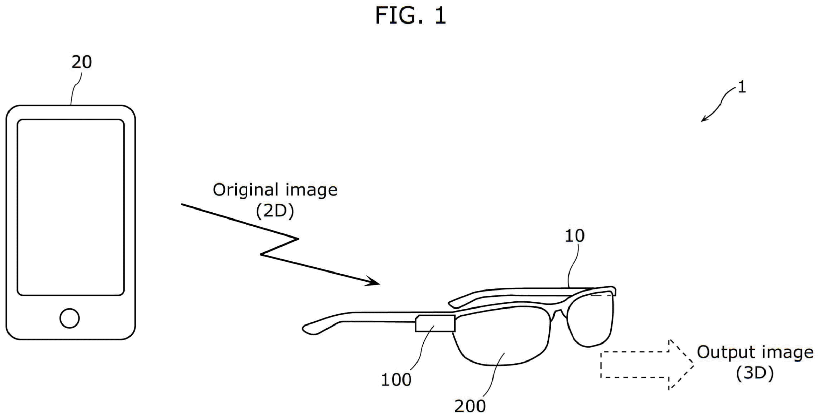

FIG. 1 illustrates a configuration of an information processing system according to an embodiment of the present disclosure.

[FIG. 2]

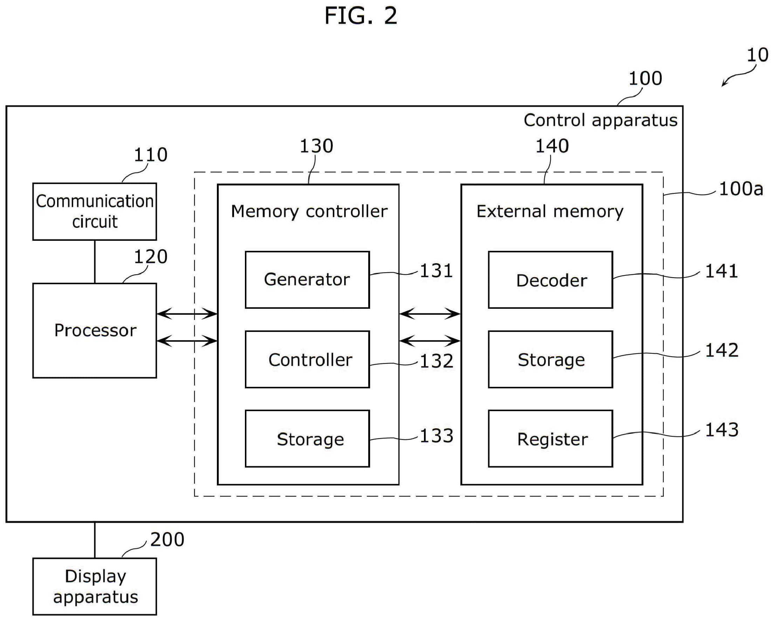

FIG. 2 illustrates a configuration of a user device according to an embodiment of the present disclosure.

[FIG. 3]
FIG. 3 is for explaining commands output by a memory controller according to an embodiment of the present disclosure and data to be read out.

[FIG. 4] FIG. 4 is a sequence diagram illustrating operations of a memory system according to an embodiment of the present disclosure.

[FIG. 5]

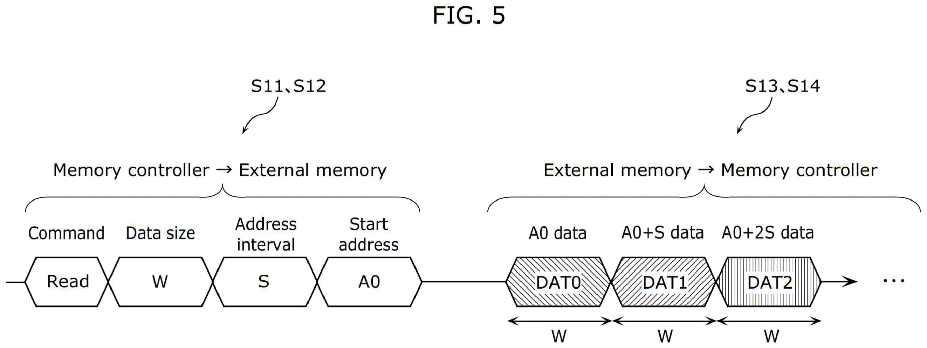

FIG. 5 schematically illustrates signals on a transmission path transmitted in a memory system according to an embodiment of the present disclosure.

[FIG. 6A]

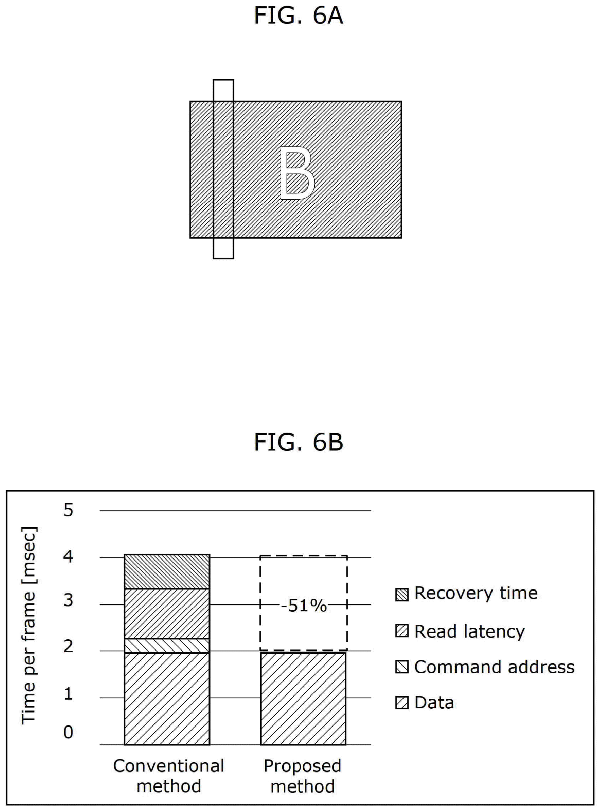

FIG. 6A is for explaining a data read method when evaluating the advantageous effects according to an embodiment of the present disclosure.

[FIG. 6B]
FIG. 6B is for explaining advantageous effects when reading out a compressed image according to an embodiment of the present disclosure.

[FIG. 7]

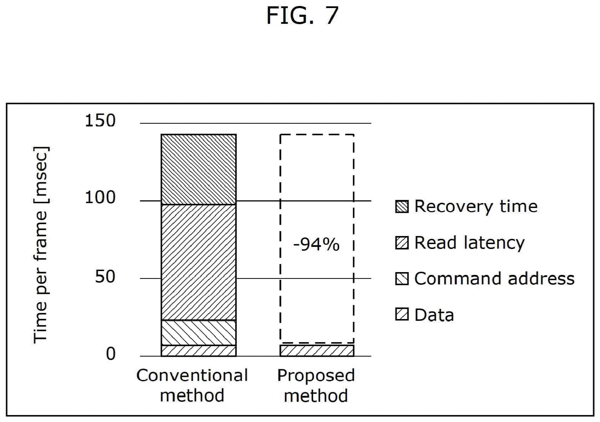

FIG. 7 is for explaining advantageous effects when reading out an uncompressed image according to an embodiment of the present disclosure.

[FIG. 8A]

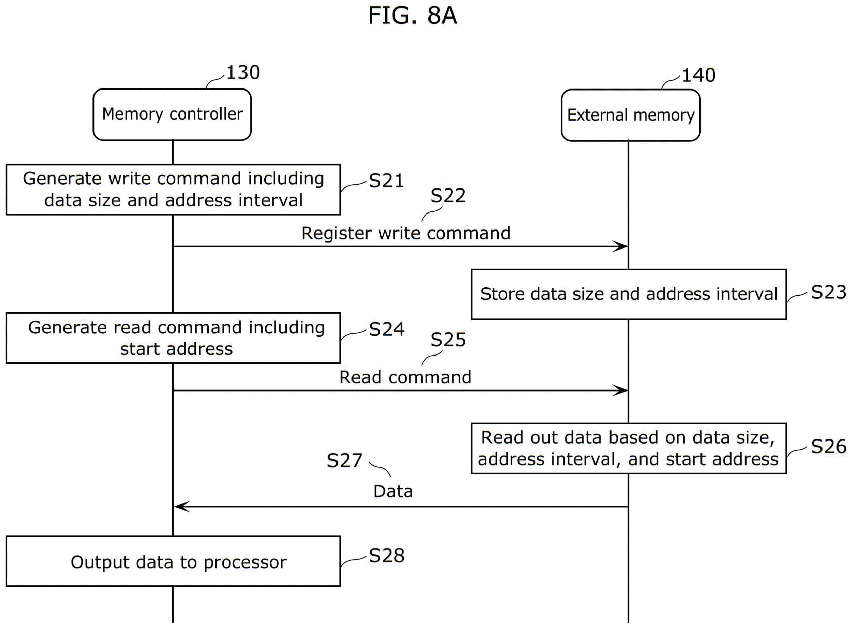

FIG. 8A is a sequence diagram illustrating operations of a memory system according to Variation 1 of an embodiment of the present disclosure.

[FIG. 8B]

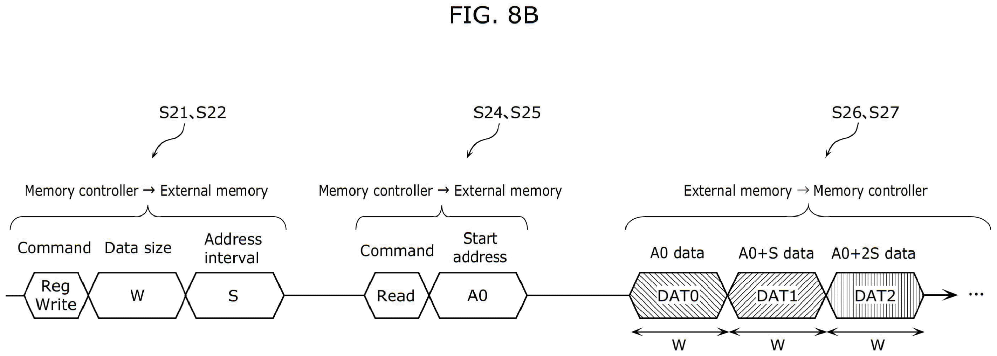

FIG. 8B schematically illustrates information transmitted in a memory system according to Variation 1 of an embodiment of the present disclosure.

[FIG. 9A]

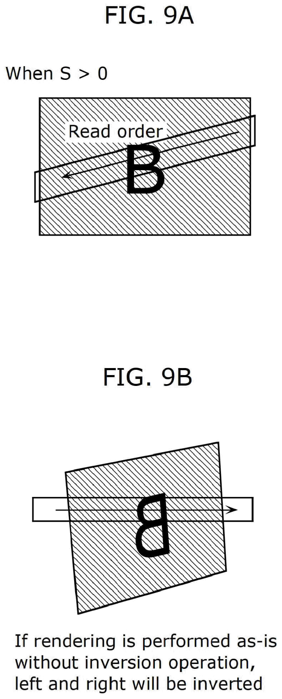

FIG. 9A is for explaining reading when the address interval is positive according to Variation 2 of an embodiment of the present disclosure.

[FIG. 9B]
FIG. 9B is for explaining rendering when the address interval is positive according to Variation 2 of an embodiment of the present disclosure.

[FIG. 10A]

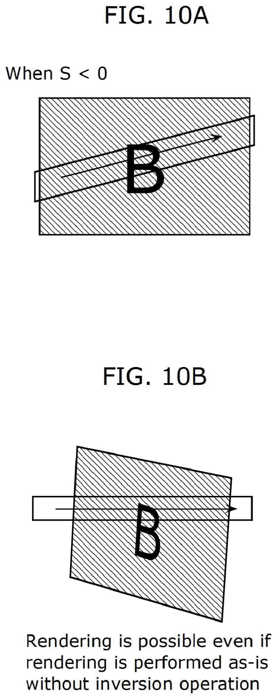

FIG. 10A is for explaining reading when the address interval is negative according to Variation 2 of an embodiment of the present disclosure.

[FIG. 10B]
FIG. 10B is for explaining rendering when the address interval is negative according to Variation 2 of an embodiment of the present disclosure.

[FIG. 11]

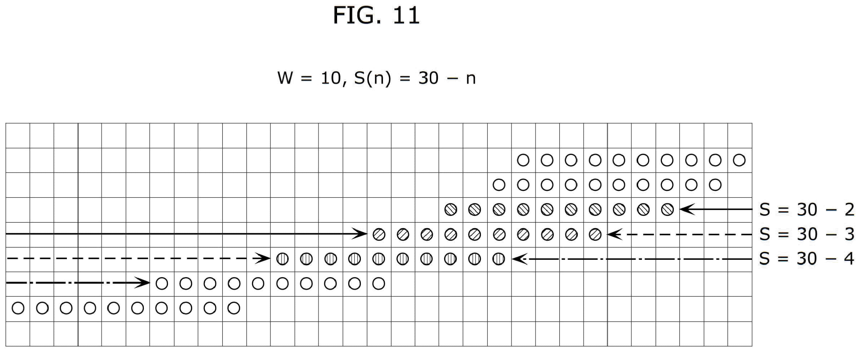

FIG. 11 is for explaining a first example of commands output by a memory controller according to Variation 3 of an embodiment of the present disclosure and data to be read out.

[FIG. 12]

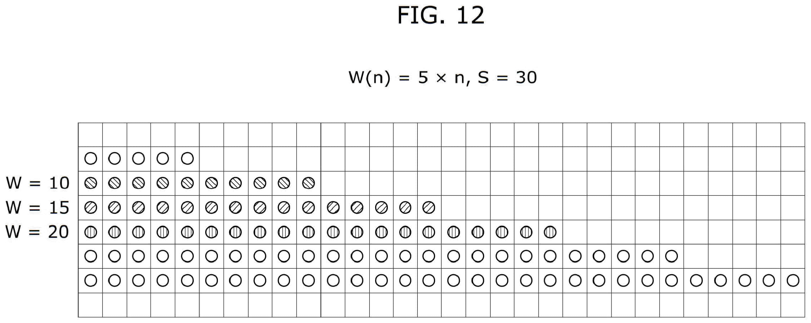

FIG. 12 is for explaining a second example of commands output by a memory controller according to Variation 3 of an embodiment of the present disclosure and data to be read out.

[FIG. 13A]

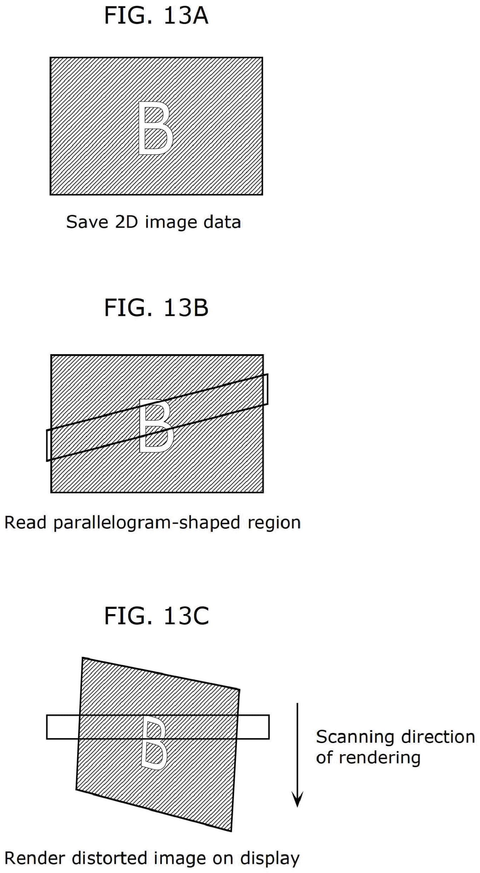

FIG. 13A is a first diagram for explaining processing executed in XR glasses.

[FIG. 13B]
FIG. 13B is a second diagram for explaining processing executed in XR glasses.

[FIG. 13C] FIG. 13C is a third diagram for explaining processing executed in XR glasses.

[FIG. 14]

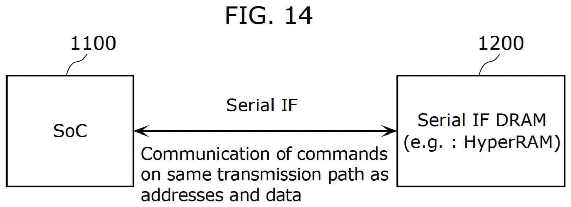

FIG. 14 is for explaining data communication of a serial interface.

[FIG. 15]

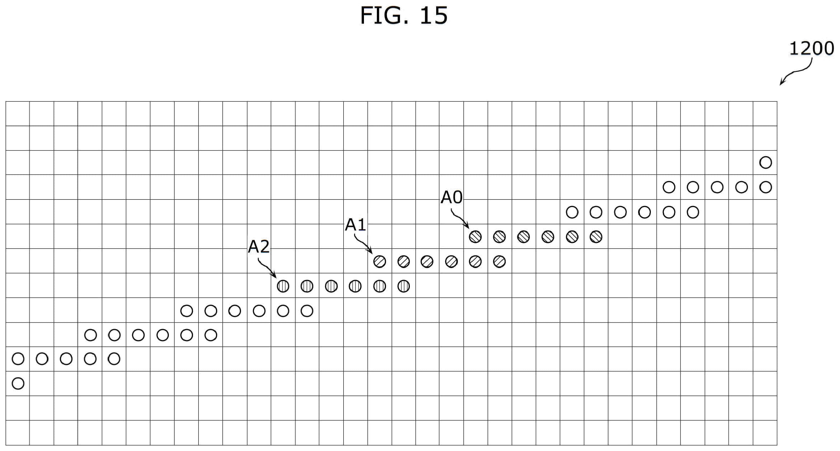

FIG. 15 is for explaining data to be read out by a memory controller in a conventional example.

[FIG. 16]

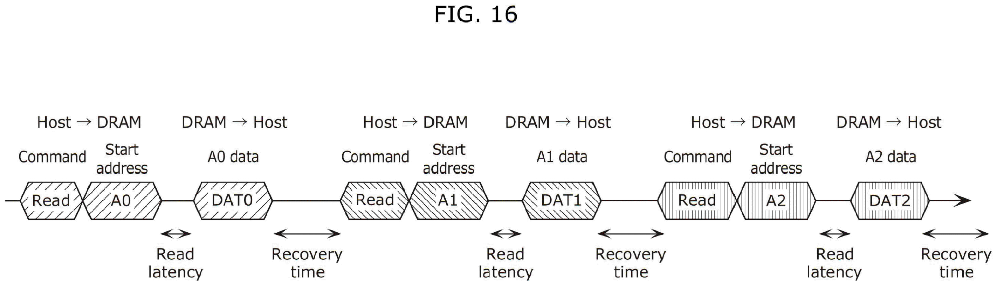

FIG. 16 schematically illustrates signals on a transmission path transmitted in a memory system in a conventional example.

[Description of Embodiments]

(Circumstances Leading to Present Disclosure)

Prior to describing the embodiments, etc., of the present disclosure, the circumstances leading to the present disclosure will be described with reference to FIG. 13A through FIG. 16. Hereinafter, as an example of an information processing system, a method of reading out two-dimensional (2D) image data when the 2D image data is displayed as a three-dimensional image in XR (Cross Reality/Extended Reality) glasses will be described. The XR glasses include an external memory that stores 2D image data, and a memory controller that controls writing and reading of the 2D image data to and from the external memory. A memory system is configured of the memory controller and the external memory.

FIG. 13A through FIG. 13C are for explaining processing executed in the XR glasses.

FIG. 13A is for explaining saving (storing) 2D image data in external memory in the XR glasses. The memory controller, for example, obtains 2D image data from a host device and saves the obtained 2D image data in external memory. The 2D image data is stored in the external memory such that positions of pixels in the 2D image data correspond to positions of addresses of the memory region in which the 2D image data is stored.

FIG. 13B is for explaining reading out 2D image data stored in an external memory. In order to output a 3D image (in order to perform projective transformation of a 2D image to a 3D image), the external memory sequentially reads out data in a diagonal direction along a parallelogram-shaped region as illustrated in FIG. 13B, for example, by a command from the memory controller.

FIG. 13C is for explaining displaying a 3D image using the read out data. A 3D image is realized by rendering, on a display, an image obtained by distorting a 2D image indicated by the 2D image data. For example, by rendering data read out in a diagonal direction in a linear manner, it is possible to render a distorted image on a display. Note that the arrow in FIG. 13C indicates the scanning direction of rendering. In this manner, the XR glasses are configured to be capable of displaying a 2D image after distorting and transforming it into a three-dimensional shape.

FIG. 14 is for explaining data communication of a serial interface.

The XR glasses include memory controller 1100 and external memory 1200. Memory controller 1100 is realized by, for example, a system-on-chip-based (SoC-based) processor. External memory 1200 is realized by dynamic random access memory (DRAM) connected to memory controller 1100. External memory 1200 may be realized by, for example, HyperRAM or the like.

Memory controller 1100 and external memory 1200 such as these may be connected via a serial interface or may be connected via a parallel interface. When connected via a serial interface, there are advantages such as a small number of transmission paths, a reduced area required for implementation, and miniaturization, but access efficiency for non-contiguous addresses decreases. However, when connected via a parallel interface, although access efficiency for non-contiguous addresses does not easily decrease, the number of transmission paths increases, making miniaturization difficult.

In view of this, the inventors of the present application conducted extensive studies on a memory system and the like that can inhibit deterioration of access efficiency for non-contiguous data, for example, a memory system and the like that can improve access efficiency that would otherwise significantly deteriorate while preserving the advantages of a serial interface, and devised the memory system and the like described below.

Note that the following describes an example in which memory controller 1100 and external memory 1200 are connected via a serial interface. In a serial interface, commands and addresses from memory controller 1100 and data from external memory 1200 (e.g., serial interface DRAM) are communicated via the same transmission path (signal line). Note that serial in the present specification means communicating commands on the same transmission path as addresses and data.

Here, deterioration of access efficiency when memory controller 1100 and external memory 1200 are connected via a serial interface will be described with reference to FIG. 15 and FIG. 16.

FIG. 15 is for explaining data to be read out by memory controller 1100 in a conventional example. FIG. 15 schematically illustrates a memory region storing 2D image data in external memory 1200.

FIG. 15 explains a case where data in a parallelogram-shaped region as illustrated in FIG. 13B (data at addresses indicated by circles) is read out from external memory 1200 using memory controller 1100 in a conventional example. Note that in FIG. 15, for identification, data with start address A0 is indicated by circles with downward-sloping diagonal (left to right) hatching (six contiguous items of data), data with start address A1 is indicated by circles with upward-sloping diagonal (left to right) hatching (six contiguous items of data), and data with start address A2 is indicated by circles with vertical linear hatching (six contiguous items of data). Note that contiguous data refers to a collection of data having contiguous addresses in the row direction (horizontal direction on the page).

Here, an example of reading out data of three rows with start addresses A0, A1, and A2 from external memory 1200 will be described. The six contiguous items of data with start address A0 (DATO), the six items of data with start address A1 (DAT1), and the six items of data with start address A2 (DAT2) are data in mutually different rows and are mutually non-contiguous (non-contiguous in the row direction).

FIG. 16 schematically illustrates signals on a transmission path transmitted in a memory system in a conventional example. FIG. 16 illustrates signals on a transmission path when memory controller 1100 ("Host" in FIG. 16) reads out data with start addresses A0 to A2 from external memory 1200 ("DRAM" in FIG. 16).

First, memory controller 1100 transmits a read command including that the start address is AO to external memory 1200 in order to read out contiguous data beginning at start address A0, and external memory 1200 transmits contiguous data DATO beginning at start address A0 to memory controller 1100. In this manner, in the transmission protocol of the serial interface, data is read out by specifying the start address together with a command from memory controller 1100. Here, read latency (the time required for read processing) occurs from transmission of the command until contiguous data DATO is transmitted. The read command is a command for reading out data from external memory 1200.

Next, memory controller 1100 transmits a read command including that the start address is A1 to external memory 1200 in order to read out contiguous data beginning at start address A1, and external memory 1200 transmits contiguous data DATO beginning at start address A1 to memory controller 1100. Here, read latency occurs from transmission of the command until contiguous data DAT1 is transmitted.

In this way, conventionally, in order to access non-contiguous data, it is necessary to send a read command for each unit of contiguous data, and read latency occurs as many times as the read command is transmitted. Recovery time, which is the wait time between commands, also occurs.

In this way, conventionally, when a plurality of commands are transmitted to access non-contiguous data, wait time (read latencies and recovery times) increases and throughput deteriorates. Stated differently, access efficiency deteriorates.

General or specific aspects of the present disclosure may be realized as a system, a method, an integrated circuit, a computer program, a computer-readable non-transitory recording medium such as a CD-ROM, or any given combination thereof. The program may be pre-stored on the recording medium, or may be supplied to the recording medium via a wide area communications network, including the internet.

Hereinafter, one or more embodiments of the present disclosure will be described in detail with reference to the drawings.

The embodiments described below each illustrate general or specific examples. The numerical values, shapes, elements, the arrangement and connection of the elements, steps, order of the steps, etc., shown in the following embodiments are mere examples, and therefore do not limit the scope of the present disclosure. Accordingly, among the elements in the following embodiments, those not recited in any of the independent claims are described as optional elements.

The figures are schematic diagrams and are not necessarily precise illustrations. Therefore, for example, the scale in the figures may not necessarily be consistent. In the figures, elements that are essentially the same share the same reference signs, and repeated description may be omitted or simplified.

In the present specification, terms indicating relationships between elements such as "same", numerical values, and numerical ranges refer not only to their strict meanings, but encompass a range of essentially equivalents, such as a range of deviations of a small percent (or approximately 10%).

[Embodiment]

Hereinafter, the information processing system according to the present embodiment will be described with reference to FIG. 1 through FIG. 7.

[1. Information Processing System Configuration]

First, the configuration of the information processing system according to the present embodiment will be described with reference to FIG. 1 through FIG. 3. FIG. 1 illustrates a configuration of information processing system 1 according to the present embodiment.

As illustrated in FIG. 1, information processing system 1 includes user device 10 and information terminal 20. Information processing system 1 is an image display system for user device 10 to output 2D image data (original image (2D) in FIG. 1) received from information terminal 20 as a 3D image (output image (3D) in FIG. 1). The communication method between user device 10 and information terminal 20 is not particularly limited and may be wired or wireless communication. The communication standard is also not particularly limited.

User device 10 is a display apparatus capable of displaying a 3D image from 2D image data. User device 10 is realized by, for example, a wearable device that can be worn by a user or a portable mobile device. The wearable device may be, for example, an XR device (e.g., XR glasses) for realizing cross reality. Cross reality is a general term for technologies that enable perception of things that do not exist in reality by fusing the real world and the virtual world, and includes technologies such as augmented reality (AR), mixed reality (MR), and virtual reality (VR). Stated differently, the XR device may be an AR device for realizing an augmented reality space, an MR device for realizing a mixed reality space, or a VR device for realizing a virtual reality space. Examples of such XR devices include head mounted displays (HMD), AR glasses, and MR goggles, but are not limited to these examples.

Note that user device 10 is not limited to being an XR device, and may be any device that internally executes processing to read out stored 2D image data like that in FIG. 13A along a diagonal direction like a parallelogram-shaped region as illustrated in FIG. 13B, or executes processing to write diagonal direction data in the 2D image data so as to be linear on memory (write a distorted image to memory).

Information terminal 20 functions as a host device and transmits 2D image data to user device 10. In the present embodiment, information terminal 20 is a portable information terminal such as a smartphone or tablet terminal, but may be, for example, a stationary information terminal such as a personal computer (PC).

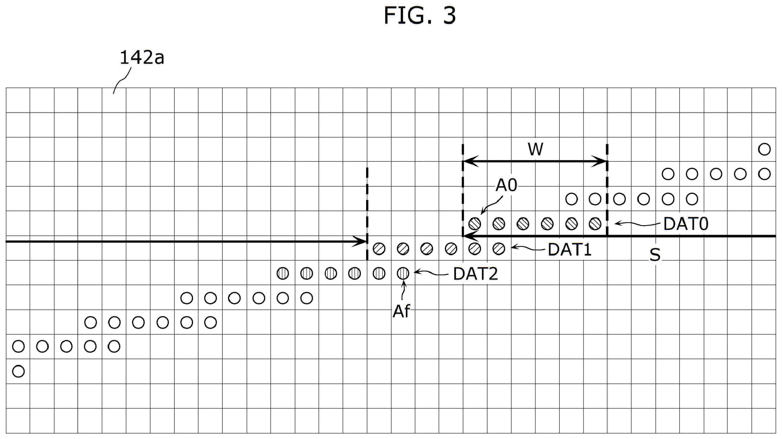

Here, the configuration of user device 10 will be described with further reference to FIG. 2 and FIG. 3. FIG. 2 illustrates a configuration of user device 10 according to the present embodiment. Note that FIG. 2 illustrates an exemplary configuration of user device 10, and the configuration of user device 10 is not limited to FIG. 2.

As illustrated in FIG. 2, user device 10 includes control apparatus 100 and display apparatus 200. User device 10 may further include a sensor (e.g., a gyro sensor) for detecting an inclination of a user's face while being worn by the user.

Control apparatus 100 is an information processing apparatus that controls a 3D image displayed by display apparatus 200. Control apparatus 100 includes communication circuit 110, processor 120, memory controller 130, and external memory 140. Memory system 100a is configured to include memory controller 130 and external memory 140.

Communication circuit 110 is a circuit for control apparatus 100 to communicate with information terminal 20. Communication circuit 110 obtains 2D image data from information terminal 20 via communication.

Processor 120 controls each element of control apparatus 100. Processor 120 controls various processes for causing display apparatus 200 to display a 3D image using 2D image data obtained from information terminal 20. Processor 120 stores 2D image data obtained via communication circuit 110 in external memory 140 by controlling memory controller 130, and when display apparatus 200 displays a 3D image, reads out data for displaying the 3D image from external memory 140 by controlling memory controller 130, and outputs the data to display apparatus 200.

When displaying a 3D image, processor 120 outputs, for example, a read command, the data size, an address interval, a start address, and an end address to memory controller 130. The read command is a command for reading out data from external memory 140.

FIG. 3 is for explaining commands output by memory controller 130 according to the present embodiment and data to be read out. FIG. 3 schematically illustrates a memory region storing 2D image data in storage 142 (a storage region) of external memory 140. Block 142a is also referred to as a cell, and indicates a storage element or a group of a certain number of cells (or storage elements). External memory 140 is, for example, memory in which blocks 142a are arranged two-dimensionally, but is not limited to this example. The arrows illustrated in FIG. 3 indicate address interval S.

Note that the circles illustrated in FIG. 3 indicate blocks 142a in a parallelogram-shaped region to be read out, but hereinafter, for convenience, an example of reading out there data of the 18 circles with linear hatching will be described. Data of blocks 142a with six circles with downward-sloping diagonal hatching constitutes one unit of contiguous data (DAT0), data of blocks 142a with six circles with upward-sloping diagonal hatching constitutes one unit of contiguous data (DAT1), and data of blocks 142a with six circles with vertical linear hatching constitutes one unit of contiguous data (DAT2). Data is read out sequentially from left to right in the row direction and from top to bottom in the column direction.

As illustrated in FIG. 3, data size W is the number of items of data to be read out (the number of blocks 142a) among a plurality of items of data arranged contiguously in the row direction in storage 142. In the example of FIG. 3, data size W is 6.

Address interval S indicates an interval between addresses in storage 142 of units of contiguous data of data size W. Address interval S is an interval (the number of blocks 142a) between a start address of one unit of contiguous data and a start address of a next unit of contiguous data. In the example of FIG. 3, the address interval between DAT0 and DAT1 is 28, and the address interval between DAT1 and DAT2 is also 28, i.e., the address intervals are the same. In the present embodiment, address interval $S > 0$.

Start address A0 indicates the address of block 142a, which serves as the starting point when reading data.

End address Af indicates the address of block 142a, which serves as the ending point when reading data.

Note that processor 120 may read data using a conventional command (see, for example, FIG. 16) when displaying a 2D image using 2D image data, for example.

When writing an image obtained by distorting an image indicated by 2D image data to external memory 140, processor 120 outputs, for example, a write command, the data size, an address interval, a start address, and an end address to memory controller 130. The write command is a command for writing data to external memory 140.

Processor 120 may appropriately determine the data size, the address interval, the start address, and the end address according to a detection result of the tilt of the face of the user wearing user device 10. In user device 10 that displays different images for the left and right eyes, processor 120 may vary the data size, the address interval, the start address, and the end address between the left and right eyes.

Referring again to FIG. 2, memory controller 130 is a control circuit that controls writing of data to external memory 140 and reading of data from external memory 140. Memory controller 130 controls writing and reading of data, for example, under control from processor 120.

Memory controller 130 includes generator 131, controller 132, and storage 133.

Generator 131 is a processing unit that generates read commands and write commands based on the command, data size W, address interval S, and start address A0 obtained from processor 120. When reading data in a diagonal direction, generator 131 generates a command that enables reading of data in the diagonal direction with a single output, and outputs the command to external memory 140.

Note that data size W and address interval S are not limited to being determined by processor 120, and may be determined by generator 131. For example, generator 131 may determine data size W and address interval S corresponding to the tilt of the face using a table in which the tilt of the face is associated with sets of data size W and address interval S.

Controller 132 is a processing unit that performs control related to writing of data to external memory 140 and reading of data from external memory 140. Controller 132 controls, for example, a chip select (chip select signal) based on end address Af obtained from processor 120. Controller 132 turns on the chip select (chip select signal), which indicates that reading is permitted, only during a period in which data from start address A0 to end address Af is being read out.

Storage 133 is a storage apparatus that stores various types of information. Storage 133 may temporarily store, for example, 2D image data to be stored in external memory 140 and image data read out from external memory 140. For example, storage 133 may function as a bus buffer for data input and output. Storage 133 may also store the above-described table used when generator 131 determines data size W and address interval S. Storage 133 is realized, for example, by semiconductor memory, but is not limited to this example.

External memory 140 is a storage apparatus that stores 2D image data, and reads or writes data based on data size W, address interval S, and start address A0 so as to perform access in accordance with the read command or the write command. External memory 140 is realized by semiconductor memory, and in the present embodiment, is realized by DRAM. Here, "external" means that processor 120 does not include it internally. Stated differently, external memory 140 is a memory separate from the internal memory of processor 120. External memory 140 includes decoder 141, storage 142, and register 143.

Decoder 141 decodes the command from memory controller 130, and executes write or read processing in accordance with the command. Decoder 141 is configured to be capable of distinguishing, for example, between conventional commands and commands according to the present embodiment (proposed commands). Decoder 141 executes read processing with the proposed command, for example, when the command includes information of a predetermined amount or more (for example, data size W and address interval S), or when the command includes information indicating that it is a proposed command.

Storage 142 is a storage circuit (storage region) that stores data such as image data.

Register 143 is also referred to as a configuration register, and is a storage circuit included in external memory 140.

Display apparatus 200 is a display that displays a 3D image. In the present embodiment, display apparatus 200 is a glasses-type display such as AR glasses (so-called smart glasses), and is an optically transparent device that enables a user to view a 3D image displayed on the display while simultaneously directly viewing an external scene. However, display apparatus 200 is not limited to this example.

In memory system 100a, memory controller 130 and external memory 140 communicate via a serial interface, and are, for example, communicably connected via a transmission path. Memory controller 130 and external memory 140 are further connected by one transmission path for chip select, two transmission paths (clock lines) for synchronous clock, and the like.

[2. Memory System Operations]

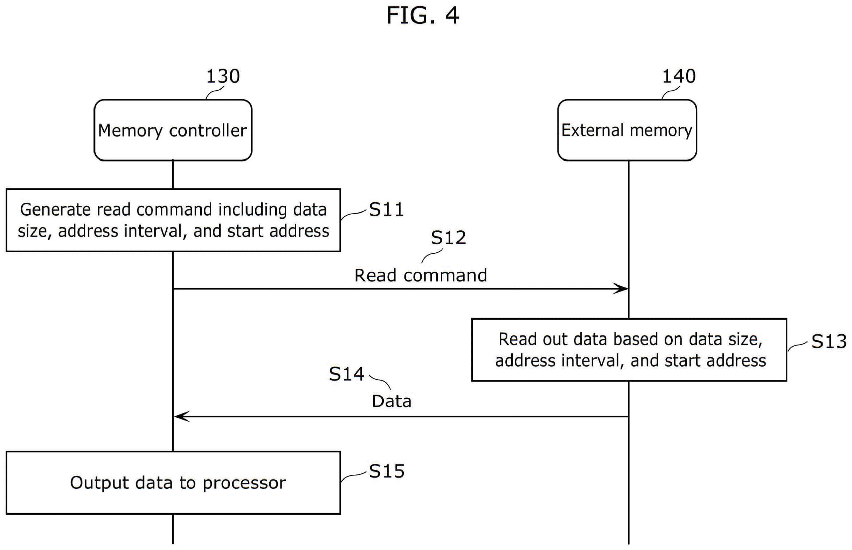

Next, operations performed by memory system 100a configured as described above will be described with reference to FIG. 4 and FIG. 5. FIG. 4 is a sequence diagram illustrating operations (memory control method, operation method (operation method of external memory 140)) of memory system 100a according to the present embodiment. FIG. 4 illustrates operations when 2D image data is already stored in storage 142, and data is read out from storage 142 along a parallelogram-shaped region in order to display a 3D image. FIG. 5 schematically illustrates signals on a transmission path transmitted in memory system 100a according to the present embodiment.

As illustrated in FIG. 4, first, generator 131 of memory controller 130 generates a read command including data size W, address interval S, and start address A0 (S11).

Next, generator 131 outputs the generated read command to external memory 140, and external memory 140 obtains the read command from memory controller 130 (S12).

As illustrated in FIG. 5, generator 131 of memory controller 130 adds (i) at least one of data size W or address interval S (in the example of FIG. 5, both data size W and address interval S) and (ii) start address A0 to the read command, and outputs the read command to external memory 140. By generating a command as illustrated in FIG. 5 (a compact instruction format with low overhead), generator 131 can read out a plurality of non-contiguous units of contiguous data by outputting the command only once. Note that the read command does not include information on end address Af.

Referring again to FIG. 4, when decoder 141 of external memory 140 obtains the read command, decoder 141 determines whether the read command is a conventional command or a proposed command, and when decoder 141 determines that the read command is a proposed command, decoder 141 reads out data based on data size W, address interval S, and start address A0 included in the command (S13). Decoder 141 can read out a plurality of non-contiguous units of data with a single read command by sequentially accessing data of data size W starting from an address calculated by Expression 1 below and incrementing the value of n (n is an integer greater than or equal to 0) by 1 from 0. Here, n is a variable (increment variable).

$$\text{Address An} = \text{A0} + \text{nS} \quad \text{...(Expression 1)}$$

Referring to FIG. 3 as an example, when the start address is A0, data size W is 6, and the address interval S is 28, decoder 141 performs the following operations. First, it reads contiguous data DAT0 consisting of six contiguous items of data beginning at start address A0. Next, it advances 28 address positions from A0 (to address A0+S) and reads contiguous data DAT1, which consists of six contiguous items of data beginning at this new start address. Further, it advances another 28 address positions (to address A0+2S) and reads contiguous data DAT2, which consists of six contiguous items of data beginning at this third start address.

Referring again to FIG. 4, external memory 140 outputs the read data to memory controller 130, and memory controller 130 obtains the data from external memory 140 (S14).

As illustrated in FIG. 5, external memory 140 outputs contiguous data DAT0 beginning at start address A0, contiguous data DAT1 beginning at start address A0+S, and contiguous data DAT2 beginning at start address A0+2S to memory controller 130. External memory 140 sequentially transmits data of data size W in order from addresses A0+nS (while changing n=0, 1, 2, ...). In the present embodiment, contiguous data DAT0, DAT1, and DAT2 each have the same data size W.

In this manner, memory controller 130 outputs the command only once, and external memory 140 returns the data (a plurality of non-contiguous units of contiguous data) in a single response.

Referring again to FIG. 4, memory controller 130 outputs the data from external memory 140 to processor 120 (S15). Accordingly, processor 120 can cause display apparatus 200 to display a 3D image using the 2D image data stored in storage 142.

[3. Advantageous Effects]

The improvement in access efficiency in memory system 100a configured as described above will be described with reference to FIG. 6A through FIG. 7. FIG. 6A is for explaining a data read method when evaluating the advantageous effects according to the present embodiment.

The advantageous effects when reading data at a 90-degree inclination with respect to the original image (2D image), as illustrated in FIG. 6A, will be verified.

FIG. 6B is for explaining advantageous effects when reading out a compressed image according to the present embodiment. The conventional method illustrated in FIG. 6B is a method that outputs a command for each unit of contiguous data as illustrated in FIG. 16, and the proposed method is a method that outputs only a single command that can read out a plurality of units of contiguous data as illustrated in FIG. 5.

As illustrated in FIG. 6B, the proposed method reduces non-data transfer time, achieving for example a 51% reduction in per-frame data readout time compared to the conventional method.

FIG. 7 is for explaining advantageous effects when reading out an uncompressed image according to the present embodiment.

As illustrated in FIG. 7, the proposed method reduces non-data transfer time, achieving for example a 94% reduction in per-frame data readout time compared to the conventional method.

In the conventional method, uncompressed images require more command outputs than compressed images, so the proposed method significantly improves access efficiency particularly when reading out uncompressed images.

(Embodiment Variations)

Hereinafter, variations of the embodiment will be described with reference to FIG. 8A through FIG. 12. The following description focuses on differences from the embodiment, and description of content that is the same as or similar to the embodiment may be omitted or simplified. Hereinafter, description will be provided using the reference signs of information processing system 1 according to the embodiment.

(Variation 1 of Embodiment)

Memory system 100a according to the present variation will be described with reference to FIG. 8A and FIG. 8B. FIG. 8A is a sequence diagram illustrating operations (memory control method, operation method) of memory system 100a according to the present variation.

As illustrated in FIG. 8A, first, generator 131 of memory controller 130 generates a write command (register write command) including data size W and address interval S (S21). Generator 131 generates, for example, a register write command based on information from processor 120. The register write command here is a command for storing data size W and address interval S in register 143 (Reg Write in FIG. 8B to be described later).

Note that in step S21, a write command including at least one of data size W or address interval S may be generated.

Next, generator 131 outputs the generated register write command to external memory 140, and external memory 140 obtains the register write command from memory controller 130 (S22).

Next, register 143 stores data size W and address interval S obtained from memory controller 130 in external memory 140 (S23). Stated differently, before obtaining the read command for reading out the 2D image data, data size W and address interval S corresponding to the 2D image data are written in advance in register 143.

In this manner, in the present variation, a process of writing at least one of data size W or address interval S in advance in register 143 of external memory 140 is executed.

FIG. 8B schematically illustrates information transmitted in memory system 100a according to the present variation.

As illustrated in FIG. 8B, generator 131 of memory controller 130 adds (i) at least one of data size W or address interval S (in the example of FIG. 8B, both data size W and address interval S) and (ii) start address A0 to the write command, and outputs the write command to external memory 140. By generating a command as illustrated in FIG. 8B, generator 131 can store at least one of data size W or address interval S in register 143 before outputting the read command. Hereinafter, operations when both data size W and address interval S are stored in register 143 will be described.

Referring again to FIG. 8A, next, generator 131 of memory controller 130 generates a read command including start address A0 (S24). Generator 131 generates, for example, a read command based on information from processor 120.

Next, generator 131 outputs the generated read command to external memory 140, and external memory 140 obtains the read command from memory controller 130 (S25).

When decoder 141 of external memory 140 obtains the read command, decoder 141 determines whether the read command is a conventional command or a proposed command, and when decoder 141 determines that the read command is a proposed command, decoder 141 reads out data based on start address AO included in the command as well as data size W and address interval S that are stored in advance in register 143 (S26). Decoder 141 reads out a plurality of non-contiguous units of data with a single read command by sequentially accessing data of data size W starting from address $A_n = A_0 + nS$ and incrementing the value of n (n is an integer greater than or equal to 0) by 1 from 0.

Note that, for example, when decoder 141 obtains a read command, if at least one of data size W or address interval S is stored in register 143, decoder 141 may determine that the read command is a proposed command, and if neither data size W nor address interval S is stored in register 143 (for example, if "0" is stored), decoder 141 may determine that the read command is a conventional command. In this manner, decoder 141 may determine which type of command the read command is based on information stored in register 143 at the time decoder 141 obtains the read command.

Since steps S27 and S28 are the same processes as steps S14 and S15 illustrated in FIG. 5, repeated description will be omitted.

Accordingly, the data amount of the read command can be reduced. Data can be read out using a method that is highly compatible with the existing HyperRAM standard.

(Variation 2 of Embodiment)

Memory system 100a according to the present variation will be described with reference to FIG. 9A through FIG. 10B. In the above embodiment, a case where address interval S is a positive value (S > 0) is described, but in the present variation, a case where address interval S can take a negative value (S < 0) will be described. The start address is specified using $A_n = A_0 + nS$ (Expression 1) used in the embodiment.

FIG. 9A is for explaining reading when address interval S is positive according to the present variation. FIG. 9B is for explaining rendering when address interval S is positive according to the present variation.

As illustrated in FIG. 9A, when performing memory access to an upward-sloping parallelogram-shaped region, if address interval S is positive, the read order is the order of the arrows (order toward the lower left). This is the same as the read order illustrated in FIG. 3 and the like.

As illustrated in FIG. 9B, if processor 120 renders the data read from external memory 140 by memory controller 130 in its original read order without performing an inversion operation, the display is horizontally inverted. Therefore, it is necessary to perform an operation for inverting the display, but that operation becomes a processing load on processor 120.

In view of this, a reading method that enables omission of the inversion operation by making the read order and the rendering order the same will be described with reference to FIG. 10A and FIG. 10B.

FIG. 10A is for explaining reading when address interval S is negative according to the present variation. FIG. 10B is for explaining rendering when address interval S is negative according to the present variation.

As illustrated in FIG. 10A, when performing memory access to an upward-sloping parallelogram-shaped region, if address interval S is negative, the read order is the order of the arrows (order toward the upper right). This is the reverse of the read order illustrated in FIG. 3 and the like. In this manner, address interval S may take a negative integer.

As illustrated in FIG. 10B, by setting address interval S to a negative value, processor 120 can render the data read from external memory 140 by memory controller 130 in its original read order without performing an inversion operation and without the display being horizontally inverted.

In this manner, by performing memory access along the same direction as the rendering direction, rendering is possible without performing an inversion operation.

(Variation 3 of Embodiment)

Memory system 100a according to the present variation will be described with reference to FIG. 11 and FIG. 12. In the above embodiment, an example is described in which the same data size W is used for each of the units of contiguous data and the same address interval S is used for each of the units of contiguous data, but at least one of data size W or address interval S is not limited to being the same for each of the units of contiguous data. Hereinafter, a case in which address interval S is not the same will be described with reference to FIG. 11, and a case in which data size W is not the same will be described with reference to FIG. 12.

FIG. 11 is for explaining a first example of commands output by memory controller 130 according to the present variation and data to be read out. In FIG. 11, an arrow indicating that address interval S is 28 is illustrated by a solid line, an arrow indicating that address interval S is 27 is illustrated by a dashed line, and an arrow indicating that address interval S is 26 is illustrated by a dashed-dotted line.

As illustrated in FIG. 11, address interval S may be a function of the variable n. FIG. 11 illustrates data to be read out when data size W is 10 and address interval S is a value calculated by Expression 2 below.

$$S(n) = 30 - n \qquad ...(Expression\ 2)$$

Parameters of function $S(n)$ can be set by memory controller 130. For example, the parameters may be included in a read command and output, or may be stored in advance in register 143.

Accordingly, address interval S can be varied in each row, and thus memory access to a region having distortion of a shape other than a parallelogram can be performed with a single read command. Note that address interval S is not limited to Expression 2, and may be any function that includes the variable n.

FIG. 12 is for explaining a second example of commands output by memory controller 130 according to the present variation and data to be read out.

As illustrated in FIG. 12, data size W may be a function of the variable n. FIG. 12 illustrates data to be read out when data size W is a value calculated by Expression 3 below and address interval S is 30.

$$W(n) = 5 \times n \qquad ...(Expression\ 3)$$

Parameters of function $W(n)$ can be set by memory controller 130. For example, the parameters may be included in a read command and output, or may be stored in advance in register 143.

Accordingly, data size W can be varied in each row, and thus memory access to a region having a shape other than a parallelogram, such as a trapezoidal shape, can be performed with a single read command. Note that data size W is not limited to Expression 3, and may be any function that includes the variable n.

Note that at least one of data size W or address interval S is not limited to being a function of the variable n. At least one of data size W or address interval S may be a function that includes another variable (for example, the position of the row to be accessed (row index)), or may be a function that includes another variable.

(Other Embodiments)

Although the memory system according to one or more aspects has been described based on the embodiment and Variations 1 to 3 of the embodiment (the embodiments, etc.), the present disclosure is not limited to the embodiments, etc. Various modifications to the exemplary embodiment as well as embodiments resulting from arbitrary combinations of elements of different exemplary embodiments that may be conceived by those skilled in the art are intended to be included within the scope of the present disclosure as long as these do not depart from the essence of the present disclosure.

For example, although the embodiments, etc., described above mainly explain an example in which the command (command format) of the present disclosure is used for a read command output by memory controller 130, the command (command format) of the present disclosure may be used for a write command. When writing 2D image data to external memory 140, memory controller 130 may add data size W, address interval S, and start address A0 to the write command and output the write command to external memory 140. External memory 140 stores the 2D image data in the memory region using data size W, address interval S, and start address A0. Accordingly, image data indicating an image in which a 2D image is distorted in advance can be stored in external memory 140. In such cases, memory controller 130 can read out data for displaying a 3D image using a conventional read command as illustrated in FIG. 16. Memory controller 130 may add a plurality of sets of data size W, address interval S, and start address A0 to the write command in order to accommodate a plurality of tilts of the user's face.

In the above embodiments, etc., an example is described in which data of a data size starting from address An = A0 + nS is sequentially accessed while incrementing the value n by 1 from 0, but the present disclosure is not limited thereto; the value of n may be incremented by 1 from an integer other than 0, or may be incremented by a numerical value other than 1. For example, the variable n may be a fixed value. Moreover, external memory 140 may specify a start address without using the variable n. For example, external memory 140 may use address AO as one start address and use an address obtained by adding or subtracting address interval S to or from address A0 as another start address.

In the above embodiments, etc., an example is described in which memory system 100a is built into user device 10, but the present disclosure is not limited thereto. For example, memory system 100a may be implemented as a standalone apparatus. Memory controller 130 and external memory 140 that constitute memory system 100a may each be implemented as standalone apparatuses.

In the above embodiments, etc., an example is described in which the target data to be written to and read from external memory 140 is image data, but the target data may be data other than image data.

In the above embodiments, etc., an example is described in which the above-described command is used in communication via a serial interface, but the above-described command may be used in communication via a parallel interface, for example.

In Variation 2 of the above embodiment, it is described that address interval S may be negative, but the present disclosure is not limited thereto. For example, the variable n may take a negative value. For example, one of address interval S or the variable n may be negative.

In the above embodiments, etc., each element may be configured as dedicated hardware or may be realized by executing a software program suitable for each element. Each element may be realized by a program execution unit, such as a CPU or processor, reading and executing a software program recorded on a recording medium such as a hard disk or semiconductor memory.

The order in which the steps in the flowcharts are executed is for illustrative purposes to specifically explain the present disclosure, and may be any other order. Some of the above steps may be executed simultaneously (in parallel) with other steps, and some of the above steps may not be executed.

The division of the functional blocks in the block diagrams is just one example; a plurality of functional blocks may be realized as a single functional block, one functional block may be divided into a plurality of functional blocks, and some functions may be transferred to other functional blocks. The functions of a plurality of functional blocks that include similar functions may be processed by a single piece of hardware or by software in parallel or in time-division.

Memory system 100a according to the above embodiments, etc. may be realized as a single apparatus, and may be realized by a plurality of apparatuses. If memory system 100a is realized by a plurality of apparatuses, each element included in the at least one circuit may be distributed to a plurality of apparatuses in any way. When the at least one circuit is realized by a plurality of apparatuses, the communication method used between the plurality of apparatuses is not particularly limited and may be wireless or wired communication. A combination of wireless and wired communications may be used between apparatuses.

Each element described in the above embodiments, etc. may be realized as software and may be typically realized as an LSI circuit, which is an integrated circuit. Each element may be realized as an individual chip, and alternatively, one or more elements may be integrated in a single chip. Although this kind of integration is referred to as "LSI" here, depending on the degree of integration, it may also be referred to as IC, system LSI, super LSI, or ultra LSI.

Circuit integration methods are not limited to LSI; the elements may be implemented using dedicated circuits (general-purpose circuits that execute dedicated programs) or a general-purpose processor. After the LSI circuit is manufactured, a field programmable gate array (FPGA) or a reconfigurable processor capable of reconfiguring the connections and settings of the circuit cells in the LSI circuit may be used. Furthermore, when advancement in semiconductor technology or derivatives of other technologies brings forth a circuit integration technology which replaces LSI, it will be appreciated that such a circuit integration technology may be used to integrate the elements.

A System LSI circuit is a super-multifunction LSI circuit manufactured with a plurality of processing units integrated on a single chip, and is specifically a computer system configured of a microprocessor, read only memory (ROM), and random access memory (RAM), for example. A computer program is stored in the ROM. The System LSI circuit achieves its function as a result of the microprocessor operating according to the computer program.

One aspect of the present disclosure may be a computer program that causes a computer to execute each of the characteristic steps included in the memory control method and the operation method illustrated in FIG. 4 or FIG. 8A.

For example, the program may be a program to be executed by a computer. One aspect of present disclosure may be a computer-readable non-transitory recording medium on which such a program is recorded. For example, such a program may be recorded on a recording medium for distribution or circulation. For example, by installing the distributed program in an apparatus that includes another processor and having that processor execute the program, it is possible to have the apparatus perform each of the above processes.


(Additional Information)

The following techniques are disclosed by the description of the embodiments, etc., above.

(Technique 1) A memory system including: a memory controller; and external memory connected to the memory controller, wherein the memory controller is configured to transmit, to the external memory: a read command or a write command; a data size; an address interval that is an interval between addresses of units of contiguous data of the data size; and a start address, and the external memory is configured to read or write data based on the data size, the address interval, and the start address to perform access in accordance with the read command or the write command.

With this, by using the data size, the address interval, and the start address, data at non-contiguous addresses can be accessed with a single command transmission. For example, non-contiguous data starting from the start address and non-contiguous data starting from an address obtained by adding or subtracting the address interval to or from the start address can be accessed with a single command transmission. Stated differently, the number of times commands are transmitted when accessing data at non-contiguous addresses can be reduced. Accordingly, deterioration of access efficiency when accessing data at non-contiguous addresses can be inhibited.

(Technique 2) The memory system according to Technique 1, wherein the external memory is configured to sequentially access data of the data size starting from address $An = A0 + nS$ while varying n, where n is a variable that is an integer greater than or equal to 0, S is the address interval, and A0 is the start address.

With this, data at non-contiguous addresses starting from address $An = A0 + nS$ can be sequentially accessed with a single command transmission.

(Technique 3) The memory system according to Technique 2, wherein the varying of n includes incrementing n by 1 from 0.

With this, by incrementing the variable n by 1 from 0, data at non-contiguous addresses can be sequentially accessed with a single command transmission.

(Technique 4) The memory system according to any one of Techniques 1 to 3, wherein the memory controller is configured to transmit at least one of the data size or the address interval to the external memory by adding the at least one of the data size or the address interval to the read command or the write command.

With this, at least one of the data size or the address interval can be included in the command and transmitted. With this, by accessing non-contiguous addresses using at least one of the data size or the address interval included in the command, the number of times commands are transmitted can be reduced.

(Technique 5) The memory system according to any one of Techniques 1 to 4, wherein at least one of the data size or the address interval is written in advance in a configuration register of the external memory.

With this, by accessing non-contiguous addresses using at least one of the data size or the address interval read from the configuration register, the number of times commands are transmitted can be reduced.

(Technique 6) The memory system according to any one of Techniques 1 to 5, wherein the address interval includes a negative integer.

With this, the read order and the rendering order can be matched, so a non-inverted image can be displayed by rendering in the original read order. Stated differently, rendering is possible without performing an operation for inverting the display. Accordingly, the processing amount of the apparatus in which the memory system is installed can be reduced.

(Technique 7) The memory system according to Technique 2 or 3, or any one of Techniques 4 to 6 dependent on Technique 2 or 3, wherein at least one of the data size or the address interval is represented by a function of n.

This makes it possible to support access to a region having a shape other than a parallelogram.

(Technique 8) The memory system according to Technique 7, wherein the memory controller is configured to set a parameter of the function.

With this, a region having an arbitrary shape can be set by the memory controller.

(Technique 9) The memory controller in the memory system according to any one of Techniques 1 to 8.

With this, a memory controller that can inhibit deterioration of access efficiency when accessing non-contiguous addresses can be realized.

(Technique 10) The external memory in the memory system according to any one of Techniques 1 to 8.

With this, external memory that can inhibit deterioration of access efficiency when accessing non-contiguous addresses can be realized.

(Technique 11) A memory control method executed by the memory controller in the memory system according to any one of Techniques 1 to 8, the memory control method including: transmitting, to the external memory: the read command or the write command; the data size; the address interval that is an interval between addresses of units of contiguous data of the data size; and the start address.

With this, the same effects as the memory controller described above are achieved.

(Technique 12) An operation method executed by the external memory in the memory system according to any one of Techniques 1 to 8, the operation method including: obtaining, from the memory controller: the read command or the write command; the data size; the address interval that is an interval between addresses of units of contiguous data of the data size; and the start address; and reading or writing data based on the data size, the address interval, and the start address to perform access in accordance with the read command or the write command.

With this, the same effects as the external memory described above are achieved.

[Industrial Applicability]

The present disclosure is applicable to memory systems.

[Reference Signs List]

| | |
|---|---|
| 1 | information processing system |
| 10 | user device |
| 20 | information terminal |
| 100 | control apparatus |
| 100a | memory system |
| 110 | communication circuit |
| 120 | processor |
| 130, 1100 | memory controller |
| 131 | generator |
| 132 | controller |
| 133, 142 | storage |
| 140, 1200 | external memory |
| 141 | decoder |
| 142a | block |
| 143 | register |
| 200 | display apparatus |
| A0, A1, A2 | start address |
| Af | end address |
| DAT0, DAT1, DAT2 | contiguous data |
| S | address interval |
| W | data size |

**Claims**

1. A memory system comprising:

    a memory controller; and
    external memory connected to the memory controller, wherein

the memory controller is configured to transmit, to the external memory: a read command or a write command; a data size; an address interval that is an interval between addresses of units of contiguous data of the data size; and a start address, and

the external memory is configured to read or write data based on the data size, the address interval, and the start address to perform access in accordance with the read command or the write command.

2. The memory system according to claim 1, wherein
the external memory is configured to sequentially access data of the data size starting from address $An = A0 + nS$ while varying n, where n is a variable that is an integer greater than or equal to 0, S is the address interval, and A0 is the start address.

3. The memory system according to claim 2, wherein
the varying of n includes incrementing n by 1 from 0.

4. The memory system according to any one of claims 1 to 3, wherein
the memory controller is configured to transmit at least one of the data size or the address interval to the external memory by adding the at least one of the data size or the address interval to the read command or the write command.

5. The memory system according to any one of claims 1 to 3, wherein
at least one of the data size or the address interval is written in advance in a configuration register of the external memory.

6. The memory system according to any one of claims 1 to 3, wherein
the address interval includes a negative integer.

7. The memory system according to claim 2 or 3, wherein
at least one of the data size or the address interval is represented by a function of n.

8. The memory system according to claim 7, wherein
the memory controller is configured to set a parameter of the function.

9. The memory controller in the memory system according to any one of claims 1 to 3.

10. The external memory in the memory system according to any one of claims 1 to 3.

11. A memory control method executed by the memory controller in the memory system according to any one of claims 1 to 3, the memory control method comprising:
transmitting, to the external memory: the read command or the write command; the data size; the address interval that is an interval between addresses of units of contiguous data of the data size; and the start address.

12. An operation method executed by the external memory in the memory system according to any one of claims 1 to 3, the operation method comprising:

obtaining, from the memory controller: the read command or the write command; the data size; the address interval that is an interval between addresses of units of contiguous data of the data size; and the start address; and

reading or writing data based on the data size, the address interval, and the start address to perform access in accordance with the read command or the write command.

FIG. 1

Original image
(2D)

Output image
(3D)

EP 4 773 013 A1

# FIG. 2

**FIG. 3**

## FIG. 4

140 — External memory

130 — Memory controller

S11 — Generate read command including data size, address interval, and start address

S12 — Read command

S13 — Read out data based on data size, address interval, and start address

S14 — Data

S15 — Output data to processor

FIG. 5

S11、S12

S13、S14

Memory controller → External memory

External memory → Memory controller

| Command | Data size | Address interval | Start address |
|---------|-----------|------------------|---------------|
| Read | W | S | A0 |

A0 data — DAT0 — W
A0+S data — DAT1 — W
A0+2S data — DAT2 — W

...

EP 4 773 013 A1

## FIG. 6A

## FIG. 6B

FIG. 7

## FIG. 8A

130 Memory controller
140 External memory

Generate write command including data size and address interval — S21

Register write command — S22

Store data size and address interval — S23

Generate read command including start address — S24

Read command — S25

Read out data based on data size, address interval, and start address — S26

Data — S27

Output data to processor — S28

EP 4 773 013 A1

# FIG. 8B

S21、S22

S24、S25

S26、S27

Memory controller → External memory

Memory controller → External memory

External memory → Memory controller

Command | Data size | Address interval

Command | Start address

A0 data | A0+S data | A0+2S data

Reg Write | W | S

Read | A0

DAT0 | DAT1 | DAT2 | ...

W | W | W

EP 4 773 013 A1

## FIG. 9A

When S > 0

## FIG. 9B

If rendering is performed as-is
without inversion operation,
left and right will be inverted

## FIG. 10A

When S < 0

## FIG. 10B

Rendering is possible even if
rendering is performed as-is
without inversion operation

FIG. 11

W = 10, S(n) = 30 − n

S = 30 − 2
S = 30 − 3
S = 30 − 4

FIG. 12

W(n) = 5 × n, S = 30

W = 10
W = 15
W = 20

## FIG. 13A

Save 2D image data

## FIG. 13B

Read parallelogram-shaped region

## FIG. 13C

Scanning direction of rendering

Render distorted image on display

## FIG. 14

1100

1200

SoC

Serial IF

Communication of commands
on same transmission path as
addresses and data

Serial IF DRAM
(e.g. : HyperRAM)

EP 4 773 013 A1

# FIG. 15

# FIG. 16

EP 4 773 013 A1

Host → DRAM    DRAM → Host    Host → DRAM    DRAM → Host    Host → DRAM    DRAM → Host

Command  Start      A0 data      Command  Start      A1 data      Command  Start      A2 data
         address                          address                          address

Read  A0      DAT0      Read  A1      DAT1      Read  A2      DAT2

Read          Recovery     Read          Recovery     Read          Recovery
latency       time         latency       time         latency       time

## INTERNATIONAL SEARCH REPORT

| International application No. |
| --- |
| **PCT/JP2024/030468** |

| | |
| --- | --- |
| **A.** | **CLASSIFICATION OF SUBJECT MATTER** |

*G06F 12/02*(2006.01)i
FI:　G06F12/02 580F; G06F12/02 580E

According to International Patent Classification (IPC) or to both national classification and IPC

| | |
| --- | --- |
| **B.** | **FIELDS SEARCHED** |

Minimum documentation searched (classification system followed by classification symbols)

G06F12/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2002-108802 A (KABUSHIKI KAISHA TOSHIBA) 12 April 2002 (2002-04-12) paragraphs [0015]-[0035], fig. 1-3 | 1-3, 5, 9-12 |
| Y | | 4, 6 |
| A | | 7-8 |
| Y | JP 2022-049553 A (KIOXIA CORP.) 29 March 2022 (2022-03-29) paragraphs [0220]-[0243], fig. 16-18 | 4 |
| Y | JP 2019-022071 A (RICOH COMPANY, LTD.) 07 February 2019 (2019-02-07) paragraphs [0038]-[0039], fig. 5 | 6 |

☐ Further documents are listed in the continuation of Box C.　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 November 2024** | **19 November 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/030468**

| Patent document cited in search report | | | Publication date (day/month/year) | Patent family member(s) | Publication date (day/month/year) |
|---|---|---|---|---|---|
| JP | 2002-108802 | A | 12 April 2002 | (Family: none) | |
| JP | 2022-049553 | A | 29 March 2022 | US 2022/0083491 A1 paragraphs [0247]-[0270], fig. 16-18 CN 114265793 A | |
| JP | 2019-022071 | A | 07 February 2019 | (Family: none) | |

Form PCT/ISA/210 (patent family annex) (July 2022)

**REFERENCES CITED IN THE DESCRIPTION**

**Patent documents cited in the description**

- JP 2024103198 A